# EUROPÄISCHE PATENTSCHRIFT

(11) **EP 1 537 770 B1**
(45) Veröffentlichungstag und Bekanntmachung des Hinweises auf die Patenterteilung: **05.09.2007**
(21) Anmeldenummer: 05004986.5
(22) Anmeldetag: 21.08.2004
(51) Int. Cl.: A01D 43/14, A01D 43/08

(54) **Landwirtschaftliche Erntemaschine**
Agricultural harvesting machine
Moissoneuse agricole

(30) Priorität: 25.09.2003 DE 10344658
(43) Veröffentlichungstag der Anmeldung: 08.06.2005
(62) Teilanmeldung aus: 04019884.8
(73) Patentinhaber: CLAAS Selbstfahrende Erntemaschinen GmbH, 33428 Harsewinkel (DE)
(72) Erfinder: Landwehr, Karl Heinz, 49171 Hagen a.T.W. (DE); Isfort, Heinrich, 48249 Dülmen (DE); Baaken, Verena, 47809 Krefeld (DE); Deppe, Markus, 33790 Halle (DE)

(56) Entgegenhaltungen:
- DE-A- 19 963 196
- FR-A- 2 420 296
- US-A- 4 448 707

## Beschreibung

Die zugrundeliegende Erfindung betrifft eine landwirtschaftliche Maschine, insbesondere einen Feldhäcksler nach dem Oberbegriff des Anspruchs 1.

Um beispielsweise gehäckseltes Erntegut als Futtermittel leicht verdaulich für das Vieh aufzubereiten hat es sich als vorteilhaft herausgestellt, ein Siliermittel während des Ernteprozesses dem Erntegut beizufügen. Um das Beifügen umzusetzen, werden unmittelbar an der Erntemaschine ein oder mehrere Behälter mitgeführt, in denen das Siliermittel enthalten ist.

Die DE 199 63 196 A1 offenbart ein Verfahren zum Einbringen von Siliermitteln in Erntegutströme und eine Einrichtung zur Durchführung dieses Verfahrens.
Die Einrichtung ist in Form eines Kunststoffbehälters ausgeführt, wobei eine Dosierpumpe innerhalb des Kurstoffbehälters angeordnet ist. Die Einrichtung ist als separate Baueinheit neben der Fahrerkabine auf dem Rahmen des Feldhäckslers angeordnet.

Nachteilig an dieser Ausführung ist insbesondere die umständliche Anordnung des Behältnisses unmittelbar neben der Fahrerkabine. Hierdurch wird das Sichtfeld des Fahrers unnötig eingeschränkt. Diese Einschränkung ist bei Siliermittelbehältern mit einem Volumen von zum Teil über 1000 Litern teilweise erheblich.
Eine andere Anbringung an der landwirtschaftlichen Maschine schränkt die Zugänglichkeit an einzelnen Organen stark ein.

Nachteilig ist weiter die umständliche Montage der Dosierpumpe in den Siliermittelbehälter vor jeder einzelnen Inbetriebnahme.

Schließlich handelt es sich bei dieser Art von Siliermittelsystemen um Systeme, die zusätzlich an die landwirtschaftliche Maschine angebaut werden müssen. Dieser Anbau ist kosten - und zeitintensiv.

Zudem treten häufig Probleme bei den an sich bekannten Messerschleifvorrichtung während des Schleifvorganges auf. Die während des Schleifvorganges auftretende Funkenbildung aufgrund des Schleifens und der damit einhergehenden Entzündungsgefahr von trockenen Erntegutrückständen ist ein großer Nachteil. Die Entzündung der Erntegutrückstände kann unter Umständen ein Ausbrennen der gesamten landwirtschaftlichen Maschine zur Folge haben.

Der Erfindung liegt deshalb die Aufgabe zugrunde, eine Speichervorrichtung zur Aufnahme von Flüssigkeiten zu bilden, die sich bauraumsparend in die Karosserie der landwirtschaftlichen Maschine einfügt und deren gespeicherte Flüssigkeit an beliebige Arbeitsorgane der landwirtschaftlichen Maschine weiteneitbar ist.

Diese Aufgabe wird erfindungsgemäß durch die kennzeichnenden Merkmale des Anspruchs 1 gelöst.

Indem die Speichervorrichtung zumindest ein Flüssigkeit aufnehmendes Behältnis umfasst und die von dem Behältnis aufgenommene Flüssigkeit an zumindest ein Arbeitsaggregat weiterleitbar ist, wird sichergestellt, dass die Speichervorrichtung bauraumsparend in die Karosserie der landwirtschaftlichen Maschine integriert werden kann und die Flüssigkeit auf einfache Weise an beliebige Arbeitsaggregate der landwirtschaftlichen Maschine weiterleitbar ist.

Das Arbeitsaggregat wird von einer Schleifvorrichtung und/oder der Gegenschneide einer Häckseltrommel der als Feldhäcksler ausgeführten landwirtschaftlichen Maschine gebildet, sodass auf einfache Weise Flüssigkeiten in diese Bereich des Feldhäckslers bringbar sind.

Indem in einer vorteilhaften Ausgestaltung die Flüssigkeit als Kühlflüssigkeit ausgebildet ist, wird eine Vorrichtung geschaffen, die zum Löschen des aus den verschiedensten Gründen entstehenden Funkenflugs im Bereich der Häckseltrommel eingesetzt werden kann. Durch das Hinzufügen von Kühlwasser während des Schleifens wird dem hier oftmals entstehenden Funkenflug entgegengewirkt. Anderenfalls können die Funken bei trockenen Ernteverhältnissen die in der landwirtschaftlichen Maschine vorhandenen trockenen Erntegutrückstände entzünden, was zu einem kompletten Ausbrennen der Maschine führen kann. Neben dieser Schutzwirkung wird auch der Schleifstaub gebunden.

Eine wirksame Ausführung ergibt sich dann, wenn die Kühlflüssigkeit im Bereich der Schleifvorrichtung und/oder der Gegenschneide aus Düsen austritt und der Austritt der Kühlflüssigkeit im Bereich der Schleifvorrichtung und/oder der Gegenschneide über Ventile in der Weise gesteuert wird, dass die Flüssigkeit zugleich oder alternativ im Bereich der Schleifvorrichtung und/oder der Gegenschneide aus den jeweiligen Düsen austritt.

Durch die unmittelbare Nähe des Behältnisses zu dem Fahrwerk, wie Reifen oder Raupenfahrwerken, sowie dem zumindest teilweise Umschließen dieser Fahrwerke, wird das Behältnis zugleich als Kotflügel verwendet.

Indem das Behältnis unterhalb des Schwerpunktes der landwirtschaftlichen Erntemaschine angeordnet ist, entstehen selbst beim Befahren von Erntefeldern mit starken Steigungen keine Probleme, so dass sich die Gewichtszunahme bei vollem Behältnis nicht negativ auf die Einsatzfähigkeit der landwirtschaftlichen Maschine auswirkt. Ferner wird durch die tiefe Lagerung des Behältnisses der Befüllvorgang für den Fahrer erheblich vereinfacht. So erreicht er alle wesentlichen Bereiche des Behältnisses stehend, wohingegen bei den allgemein bekannten Systemen die Zugänglichkeit aufgrund der hohen Anordnung neben der Fahrerkabine oder im hinteren Bereich der landwirtschaftlichen Maschine erschwert ist.

Die Integration des Behältnisses als Bestandteil des Fahrgestells hat den Vorteil, dass auf diese Weise auf das Fahrgestell wirkende Kräfte von dem Behältnis mitaufgenommen werden können.

Indem das Behältnis wenigstens eine Aussparung aufweist in welche eine Pumpe integriert ist, wird bei der Verwendung als Flüssigkeitstank die gesamte Flüssigkeit in der landwirtschaftlichen Maschine dauerhaft, ohne den Fahrer während der Ernte zu belasten oder den Erntevorgang zu beeinträchtigen, mitgeführt. Dem Fahrer wird eine übersichtliche Kontrolle bezogen auf die Flüssigkeitsabgabe gegeben. Außerdem übernimmt das Behältnis die Funktion von Anbaugruppen der Fahrzeugkarosserie.

Ferner besteht die Möglichkeit die im Behältnis enthaltene Flüssigkeit, die als Kühlflüssigkeit ausgebildet ist, an ein Arbeitsaggregat oder ein beliebiges anderes Organ der landwirtschaftlichen Maschine weiterzuleiten.

Denkbar ist weiterhin ein Behältnis als Bestandteil der Karosserie zu verwenden, deren Teile horizontal und/oder vertikal verschwenkbar sind. Hierdurch wird zusätzlicher Stauraum für beispielsweise Ersatzteile oder Reparaturwerkzeuge geschaffen, welche notwendigerweise stets während der Ernte mitgeführt werden müssen. Die horizontale und/oder vertikale Verschwenkbarkeit vereinfacht hierbei die Zugänglichkeit zum Inhalt des Behältnisses.

Weitere vorteilhafte Ausgestaltungen sind Gegenstand weiterer Unteransprüche und werden anhand von Zeichnungen näher erläutert.

Es zeigen:
- Figur 1: eine Seitenansicht eines selbstfahrenden Feldhäckslers mit erfindungsgemäßer Vorrichtung
- Figur 2: eine Detailansicht der erfindungsgemäßen Vorrichtung in Schnittdarstellung nach der Linie A - A der Figur 1
- Figur 3: eine weitere Seitenansicht eines selbstfahrenden Feldhäckslers mit aufgeschwenkter und ausgezogener erfindungsgemäßer Vorrichtung

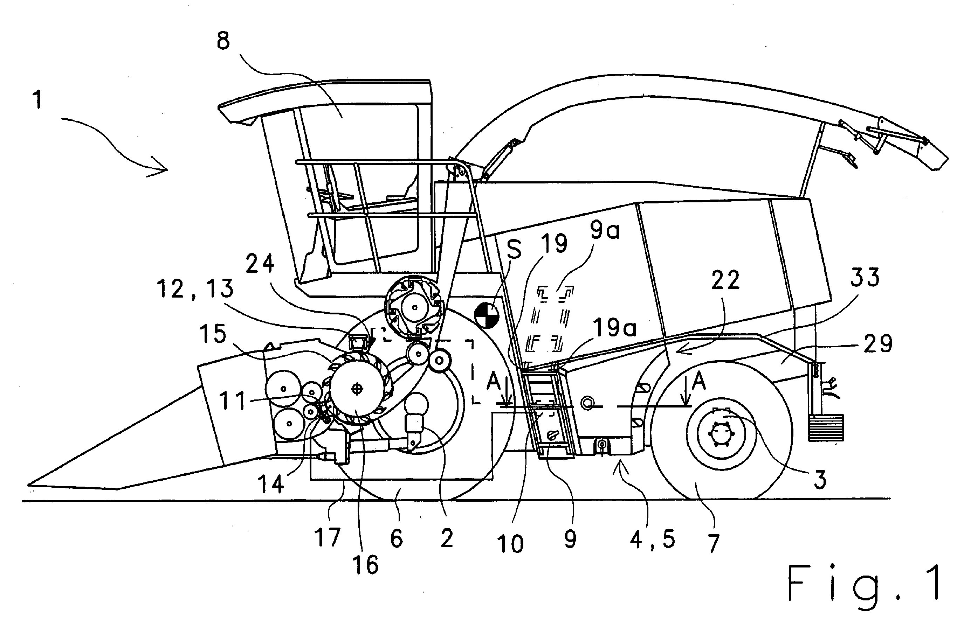

Bei dem in Figur 1 gezeigten Ausführungsbeispiel der Erfindung handelt es sich um einen selbstfahrenden Feldhäcksler 1. Zwischen der Vorderachse 2 und der Hinterachse 3 des selbstfahrenden Feldhäckslers 1 erstreckt sich die erfindungsgemäße Speichervorrichtung 4, die von einem in die Karosserie 22 integriertem Behältnis 5 gebildet wird und in dem unteren Bereich des Feldhäckslers 1 angeordnet ist. In dieser hier abgebildeten Form ist das Behältnis 5 in unmittelbarer Nähe zu den Reifen 6, 7 angeordnet, umschließt einen Teilbereich des Hinterreifens 7 und fungiert somit zugleich als Kotflügel 33.
Denkbar wäre auch, dass das Behältnis 5 zumindest teilweise den Vorderreifen 6 umschließt und auch hier als Kotflügel 33 einsetzbar ist. Im übrigen können auch andere Fahrwerke als die Vorderreifen 6 oder Hinterreifen 7, wie beispielsweise ein Raupenfahrwerk, von einem erfindungsgemäßen Behältnis 5 umschlossen werden.
Das Behältnis 5 ist unterhalb des Schwerpunktes S des Feldhäckslers 1 angeordnet. Hierdurch wird dem Fahrer der landwirtschaftlichen Maschine die Zugänglichkeit zum Behältnis 5, insbesondere der nachfolgend noch erläuterte Befüllvorgang für Flüssigkeiten, erleichtert. Ferner wirkt sich diese tiefe Anordnung des Behältnisses 5 nicht nachteilig auf die Fahreigenschaften und Fahrsicherheit des Feldhäckslers 1 aus.
Das Behältnis 5 kann zugleich Bestandteil des Fahrgestells 29 sein. Hierdurch werden auf das Fahrgestell 29 wirkende Kräfte vom Behältnis 5 zumindest teilweise aufgenommen, was zu einer Entlastung des Fahrgestellt führt.

Es liegt im Rahmen der Erfindung diese Ausführungen zu dem Behältnis 5 auch auf das nachfolgend noch beschriebene Behältnis 21 sinngemäß zu übernehmen.

Grundsätzlich kann das Behältnis 5 zur Aufnahme von Flüssigkeiten und/oder Gegenständen verwendet werden. Als häufig während des Erntebetriebs benötigte Flüssigkeiten kommen insbesondere Siliermittel oder Kühlflüssigkeiten in Betracht. Wichtige Gegenstände, die viel Platz beanspruchen und regelmäßig benötigt werden, sind unterschiedliche Reparaturwerkzeuge und Verschleißelemente, die vom Fahrer selbst ausgetauscht werden können, wie beispielsweise Häckselmesser 15.

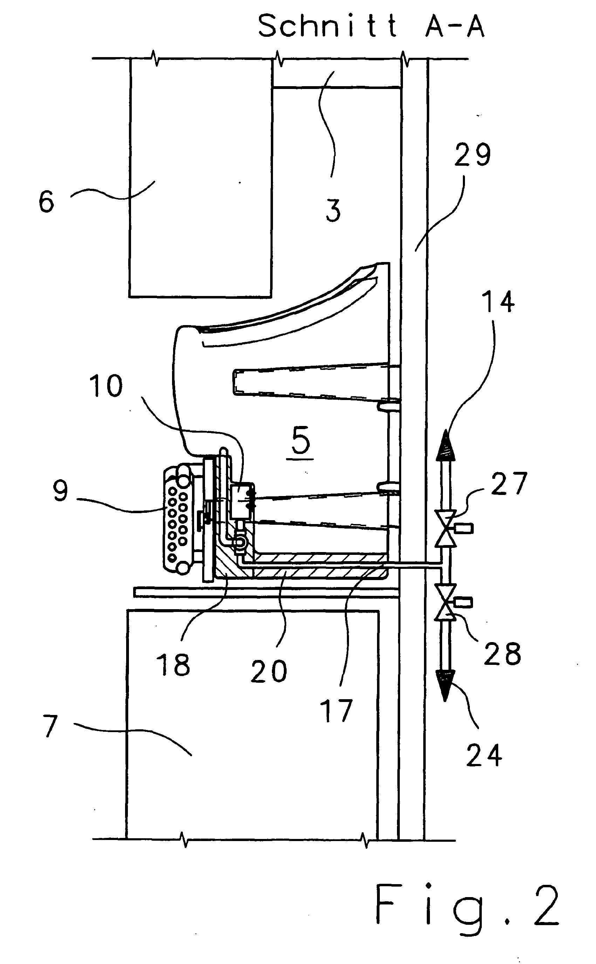

Um in die Fahrerkabine 8 zu gelangen ist eine Aufstiegsleiter 9 an dem Feldhäcksler 1 erforderlich. Diese Aufstiegsleiter 9 ist in das Behältnis 5 integriert. Zur Aufnahme der Aufstiegsleiter 9 weist das Behältnis 5 besondere Ausformungen auf, so dass sich die Umrisse der Aufstiegsleiter 9 in das Behältnis 5 einfügen. Ein besonderes Merkmal ist hierbei die in Strichlinienzeichnung 9a angedeutete aufwärtige Verschwenkbarkeit der Aufstiegsleiter 9. Durch die Verschwenkbarkeit der Aufstiegsleiter 9 wird der Zugang zu der hinter der Aufstiegsleiter 9 in einer besonderen hierfür vorgesehenen und in Figur 2 näher dargestellten Aussparung liegenden, strichliniert abgebildeten Pumpe 10 zur Förderung des Siliermittels geschaffen. Der Zugang zur Pumpe 10 ist oftmals während des Erntebetriebs erforderlich, um beispielsweise die Abgabemenge des Siliermittels zu regulieren. Zudem dient die heruntergeschwenkte Aufstiegsleiter 9 gleichzeitig als Schutz für die ansonsten freiliegende Pumpe 10.
Um nun das Siliermittel an das Erntegut abzugeben, hat es sich als besonders vorteilhaft erwiesen, das Siliermittel unmittelbar hinter der Gegenschneide 11 dem Erntegut beizumengen. Zu diesem Zweck wird ein Schlauch 17 von dem Behältnis 5 zu der Gegenschneide 11 geführt, von wo aus das Siliermittel beispielsweise über eine oder mehrere Düsen 14 an das unmittelbar zuvor gehäckselte Erntegut abgegeben wird. Auf diese Weise wird das Siliermittel besonders gleichmäßig dem Erntegut beigemengt, da es nach dem Häckselvorgang eine einheitliche Schichtdicke aufweist. Ein weiterer Vorteil ist der einfachere Transport des durch das Siliermittel leicht angefeuchteten Ernteguts innerhalb des Feldhäckslers 1, da sich feuchtes Erntegut besser transportieren lässt als trockenes Erntegut. Zudem wird das feuchte Erntegut zu einem kompakteren Erntegutaustrittsstrahl gebündelt, wodurch es einfacher und genauer an einen Transportwagen übergeben werden kann.

Es besteht aber auch die Möglichkeit das Siliermittel an jeder beliebigen Stelle innerhalb des Feldhäckslers 1 an das Erntegut abzugeben.

Ebenso ist die Möglichkeit gegeben, anstelle von Siliermittel Wasser aus dem Behältnis 5 an ein Arbeitsaggregat 12, wie beispielsweise eine Messerschleifvorrichtung 13 für die Messer 15 an einer Häckseltrommel 16, zu leiten. Die Verbindung zwischen Behältnis 5 und Messerschleifvorrichtung 13 ist strichliniert in der Figur 1 abgebildet. Die Abgabe des Wassers erfolgt ebenfalls über allgemein bekannte Düsen 24. Durch das Anfeuchten der Messerschleifvorrichtung 13 während des Schleifvorganges wird der Funkenbildung aufgrund des Schleifens und der damit einhergehenden Entzündungsgefahr von trockenen Erntegutrückständen, vorgebeugt. Die Entzündung der Erntegutrückstände kann unter Umständen ein Ausbrennen der gesamten landwirtschaftlichen Maschine zur Folge haben.

Figur 2 zeigt eine weitere Detailansicht der erfindungsgemäßen Vorrichtung in Schnittdarstellung gemäß der in Figur 1 abgebildeten Linie A ― A in Draufsicht. Hierauf ist die besondere Ausgestaltung des zwischen dem Vorderreifen 6 und dem Hinterreifen 7 angeordneten Behältnisses 5 zu erkennen.
Das Behältnis 5 ist in Richtung des Hinterreifens 7 derart ausgeformt, das es zumindest teilweise den Hinterreifen 7 umschließt. Hierdurch bildet das Behältnis 5 gleichermaßen den Kotflügel 33 des Feldhäckslers 1. In dem Behältnis 5 sind zwei weitere schraffiert unterlegte Aussparungen 18, 20 dargestellt. In der Aussparung 18 ist die Pumpe 10 angeordnet. Die über zwei Schwenkpunkte 19, 19a verschwenkbare Aufstiegsleiter 9 verschließt diese Aussparung 18 im herabgesenkten Zustand , so dass die Pumpe 10 durch die beim Ernteeinsatz aufkommenden Verschmutzungen oder durch stehendes Erntegut nicht beschädigt wird. Der von der Pumpe 10 ausgehende Schlauch 17 führt durch eine weitere Aussparung 20 zu der Siliermittelabgabestelle innerhalb des Feldhäckslers 1.
Es liegt im Rahmen der Erfindung, dass die Abgabe der in dem Behältnis 5 enthaltenen Flüssigkeit oder Substanz über Ventile 27, 28 gesteuert wird. So ist vorstellbar, dass durch die Öffnung des Gegenschneidenventils 27 die Flüssigkeit ausschließlich zur Gegenschneide 11 geleitet wird. Umgekehrt kann durch die Betätigung des Schleifvorrichtungsvenbls 28 ― bei geschlossenem Gegenschneidenventil 27 ― die Flüssigkeit ausschließlich zur Messerschleifvorrichtung 13 fließen. Alternativ hierzu können sowohl das Gegenschneidenventil 27 als auch das Schleifvorrichtungsventil 28 geöffnet werden.
Bei einer nachfolgend noch beschriebenen Untergliederung des Behältnisses 5 in verschiedene Abschnitte besteht außerdem die Möglichkeit, das Siliermittel getrennt von dem Wasser aufzubewahren. Die hat zum Vorteil, dass über eine Verbindung der unterschiedlichen Abschnitte miteinander das Wasser dem Siliermittel beimengbar ist - oder umgekehrt ― und hierdurch die Siliermittelkonzentration vom Fahrer der landwirtschaftlichen Erntemaschine 1 genau bestimmt werden kann. Außerdem kann das reine Wasser, ohne Siliermittelzusätze, als Kühlmittel für das Schleifen der Häckselmesser 15 eingesetzt werden. Dies hat den Vorteil, dass das Siliermittel nicht mit den Häckselmessern 15 in Berührung kommt und somit einem beschleunigten Verrosten der Häckselmesser 15 durch das Siliermittel vorgebeugt wird.

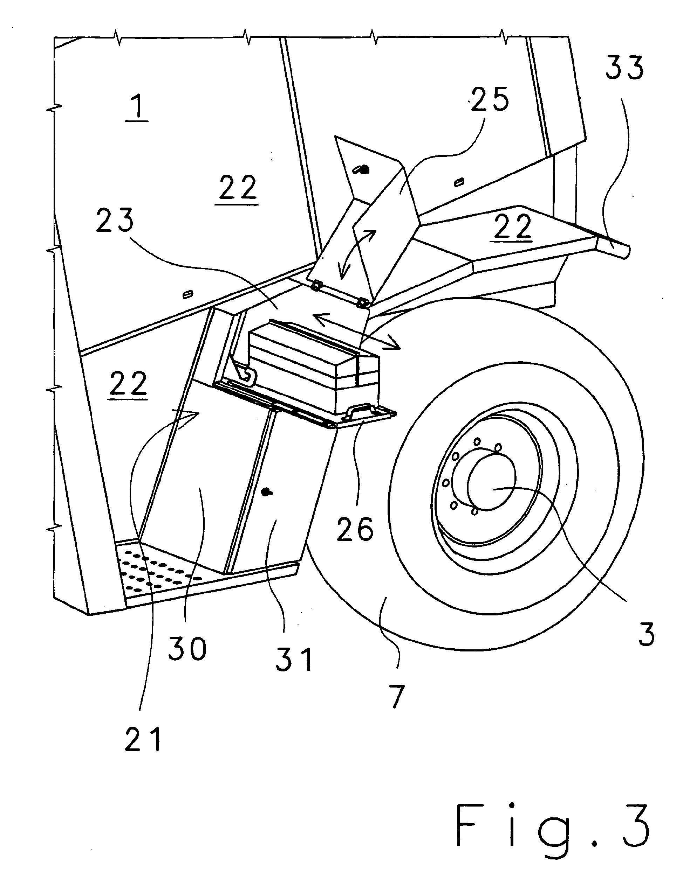

Die Figur 3 zeigt eine weitere Seitenansicht eines Feldhäckslers 1 mit aufgeschwenktem und ausgezogenem Behältnis 21. Im Unterschied zu dem Behältnis 5 ist dieses Behältnis 21 zur Aufnahme von unterschiedlichen Gegenständen ausgeführt, fügt sich im übrigen jedoch gleichermaßen als Bestandteil der Karosserie 22 in Form eines Kotflügels 33 ein.
In dem abgebildeten Ausführungsbeispiel ist das Behältnis 21 zweiteilig ausgeführt. Der obere Teil 23 ist von einer Klappe 25 umschlossen. Die Klappe 25 ist vertikal verschwenkbar, so dass im aufgeschwenkten Zustand bequem auf den Inhalt des oberen Teils 23 des Behältnisses 21 Zugriff genommen werden kann.

Ein Zugewinn an Stauraum und eine Erweiterung der Handhabbarkeit wird dadurch erreicht, indem der Boden 26 des oberen Teils 23 des Behältnisses 21 beweglich ist. Diese Beweglichkeit kann durch allgemein bekannte Gleitelement realisiert werden und ermöglicht, dass auch größere Gegenstände, wie beispielsweise Werkzeugkisten, mitführbar sind. Hierdurch kann notwendiger Stauraum gewonnen werden, ohne dass die auf öffentlichen Straßen zulässige Gesamtbreite eines Fahrzeuges überschritten wird. Aufgrund dieser Bewegbarkeit kann der Boden 26, wie strichliniert angedeutet, bis in den Maschineninnenraum hineinreichen, ohne hierbei vorhandene Arbeitsorgane zu behindern sowie komplett aus dem Maschineninnenraum herausgezogen werden.

Der untere Teil 30 des Behältnisses 21 ist gleichfalls zur Aufnahme von Gegenständen vorgesehen. Zwecks Zugriff hierauf ist die Klappe 31 horizontal zu öffnen. Durch die unterschiedliche Art der Klappenöffnung des oberen Teils 23 und des unteren Teils 30 können beide Teilbereiche gleichzeitig zugänglich gemacht werden, ohne dass eine gegenseitige Einschränkung eintritt.

Es liegt im Rahmen der Erfindung das Behältnis 21 oder das Behältnis 5 in mehrere Abschnitte zu unterteilen, wobei die unterschiedlichen Abschnitte miteinander verbunden oder separiert sein können. Insbesondere besteht bei dem Behältnis 5 die Möglichkeit in einem Abschnitt das Siliermittel und in einem weiteren Abschnitt ausschließlich Wasser mitzuführen. So kann in Abhängigkeit von der Erntegutart eine Dosierung des Siliermittels direkt vor Ort vorgenommen werden.

Am effektivsten wird Bauraum gespart bzw. Stauraum geschaffen, sofern auf der einen Seite des Feldhäckslers 1 das Behältnis 5 und auf der anderen Seite das Behältnis 21 angeordnet wird.

Es ist aber auch denkbar die Behältnisse 5, 21 modulartig gegeneinander und beliebig auszutauschen.

Es liegt im Rahmen der Erfindung den Stauraum und die hiermit in Verbindung stehenden Verwendungszwecke nicht nur an Feldhäckslern 1, sondern an jede beliebige Art von Landmaschinen einzusetzen.

### Bezugszeichenliste:

- 1: Selbstfahrender Feldhäcksler
- 2: Vorderachse
- 3: Hinterachse
- 4: Speichervorrichtung
- 5: Behältnis
- 6: Vorderreifen
- 7: Hinterreifen
- 8: Fahrerkabine
- 9: Aufstiegsleiter
- 9a: Aufstiegsleiter
- 10: Pumpe
- 11: Gegenschneide
- 12: Arbeitsaggregat
- 13: Messerschleifvorrichtung
- 14: Düse Gegenschneide
- 15: Messer
- 16: Häckseltrommel
- 17: Schlauch
- 18: Aussparung
- 19: Schwenkpunkt
- 19a: Schwenkpunkt
- 20: Aussparung
- 21: Behältnis
- 22: Karosserie
- 23: Oberer Teil
- 24: Düse Schleifstein
- 25: Klappe
- 26: Boden
- 27: Gegenschneidenventil
- 28: Schleifsteinventil
- 29: Fahrgestell
- 30: Unterer Teil
- 31: Klappe

- 33: Kotflügel

- S: Schwerpunkt

## Patentansprüche

1. Landwirtschaftliche Maschine, insbesondere selbstfahrender Feldhäcksler, bestehend aus einer eine Speichervorrichtung aufnehmenden Karosserie, mindestens zwei das Fahrwerk bildenden Fahrachsen und unterschiedlichen Arbeitsaggregaten, wobei zumindest ein Arbeitsaggregat als Schleifvorrichtung ausgebildet ist,
**dadurch gekennzeichnet, dass**
die Speichervorrichtung (4) zumindest ein Flüssigkeit aufnehmendes Behältnis (5, 21) umfasst und die von dem Behältnis (5, 21) aufgenommene Flüssigkeit an zumindest ein Arbeitsaggregat (12) weiterleitbar ist und wobei das Arbeitsaggregat als Schleifvorrichtung und/oder Gegenschneide eines weiteren als Häckseltrommel (16) ausgeführten Arbeitsaggregats (12) ausgeführt ist.

2. Landwirtschaftliche Maschine nach Anspruch 1,
**dadurch gekennzeichnet, dass**
die Flüssigkeit als Kühlflüssigkeit ausgebildet ist.

3. Landwirtschaftliche Maschine nach Anspruch 2,
**dadurch gekennzeichnet, dass**
die Kühlflüssigkeit im Bereich der Schleifvorrichtung (13) und/oder der Gegenschneide (11) aus Düsen (14, 24) austritt.

4. Landwirtschaftliche Maschine nach einem Ansprüche 2 oder 3,
**dadurch gekennzeichnet, dass**
das der Austritt der Kühlflüssigkeit im Bereich der Schleifvorrichtung (13) und/oder der Gegenschneide (11) über Ventile (27, 28) in der Weise gesteuert wird, dass die Flüssigkeit zugleich oder alternativ im Bereich der Schleifvorrichtung (13) und/oder der Gegenschneide (11) aus den jeweiligen Düsen (14, 24) austritt.

5. Landwirtschaftliche Maschine nach Anspruch 1,
**dadurch gekennzeichnet, dass**
das Behältnis (5, 21) in unmittelbarer Nähe zu den Fahrwerken (6, 7) angeordnet ist.

6. Landwirtschaftliche Maschine nach einem oder mehreren der vorangegangenen Ansprüche,
**dadurch gekennzeichnet, dass**
das Behältnis (5, 21) zumindest teilweise wenigstens ein Fahrwerk (6, 7) umschließt.

7. Landwirtschaftliche Maschine nach einem oder mehreren der vorangegangenen Ansprüche,
**dadurch gekennzeichnet, dass**
das Behältnis (5, 21) zumindest teilweise zugleich als Kotflügel (33) für die Fahrwerke (6, 7) verwendet wird.

8. Landwirtschaftliche Maschine nach einem oder mehreren der vorangegangenen Ansprüche,
**dadurch gekennzeichnet, dass**
das Behältnis (5, 21) unterhalb des Schwerpunktes der (S) landwirtschaftlichen Maschine (1) angeordnet ist.

9. Landwirtschaftliche Maschine nach einem oder mehreren der vorangegangenen Ansprüche,
**dadurch gekennzeichnet, dass**
dass das Behältnis (5, 21) Bestandteil des Fahrgestells (29) ist.

10. Landwirtschaftliche Maschine nach einem oder mehreren der vorangegangenen Ansprüche,
**dadurch gekennzeichnet, dass**
die Flüssigkeit mittels wenigstens einer Pumpe (10) gefördert wird und die Pumpe (10) wenigstens teilweise in das Behältnis (5) integriert ist.

11. Landwirtschaftliche Maschine nach Anspruch 10,
**dadurch gekennzeichnet, dass**
das Behältnis (5) wenigstens eine Aussparung (18) aufweist in welche die Pumpe (10) zumindest teilweise integriert ist.

12. Landwirtschaftliche Maschine nach einem oder mehreren der vorangegangenen Ansprüche,
**dadurch gekennzeichnet, dass**
das Behältnis (21) Bestandteil der Karosserie ist und wenigstens ein Teil (23, 26, 30) des Behältnisses (21) horizontal und/oder vertikal verschwenkbar und verschiebbar ist.

## Claims

1. An agricultural machine, in particular a self-propelled forage harvester, comprising a bodywork accommodating a storage device, at least two axles forming the chassis unit and different working assemblies, wherein at least one working assembly is in the form of a grinding device,
**characterised in that**
the storage device (4) includes at least one liquid-receiving container (5, 21) and the liquid received by the container (5, 21) can be passed to at least one working assembly (12) and wherein the working assembly is in the form of a grinding apparatus and/or a counterpart blade of a further working assembly (12) in the form of a chopping drum (16).

2. An agricultural machine according to claim 1 **characterised in that** the liquid is in the form of cooling liquid.

3. An agricultural machine according to claim 2 **characterised in that** the cooling liquid issues from nozzles (14, 24) in the region of the grinding device (13) and/or the counterpart blade (11).

4. An agricultural machine according to one of claims 2 and 3 **characterised in that** the discharge of the cooling liquid in the region of the grinding device (13) and/or the counterpart blade (11) is controlled by way of valves (27, 28) in such a way that the liquid issues at the same time or alternatively in the region of the grinding device (13) and/or the counterpart blade (11) from the respective nozzles (14, 24).

5. An agricultural machine according to claim 1 **characterised in that** the container (5, 21) is arranged in the immediate proximity of the chassis units (6, 7).

6. An agricultural machine according to one or more of the preceding claims **characterised in that** the container (5, 21) at least partially encloses at least one chassis unit (6, 7).

7. An agricultural machine according to one or more of the preceding claims **characterised in that** the container (5, 21) is used at least in part at the same time as a mudguard (33) for the chassis unit (6, 7).

8. An agricultural machine according to one or more of the preceding claims **characterised in that** the container (5, 21) is arranged beneath the centre of gravity (S) of the agricultural machine (1).

9. An agricultural machine according to one or more of the preceding claims **characterised in that** the container (5, 21) is a component part of the chassis structure (29).

10. An agricultural machine according to one or more of the preceding claims **characterised in that** the liquid is delivered by means of at least one pump (10) and the pump (10) is at least partially integrated into the container (5).

11. An agricultural machine according to claim 10 **characterised in that** the container (5) has at least one opening (18) into which the pump (10) is at least partially integrated.

12. An agricultural machine according to one or more of the preceding claims **characterised in that** the container (21) is a component part of the bodywork and at least one part (23, 26, 30) of the container is horizontally and/or vertically pivotable and displaceable.

## Revendications

1. Machine agricole, notamment ensileuse automotrice, comportant une carrosserie abritant un dispositif de stockage, au moins deux essieux qui constituent le train roulant et différents outils de travail, au moins un outil de travail étant conformé en dispositif d'affûtage, **caractérisée par le fait que** le dispositif de stockage (4) comprend au moins un contenant (5, 21) recevant un liquide et que le liquide contenu dans le contenant (5, 21) peut être acheminé vers au moins un outil de travail (12), l'outil de travail étant conformé en dispositif d'affûtage et/ou en contre-lame d'un autre outil de travail (12) conformé en tambour hacheur (16).

2. Machine agricole selon la revendication 1, **caractérisée par le fait que** le liquide est un liquide de refroidissement.

3. Machine agricole selon la revendication 2, **caractérisée par le fait que** le liquide de refroidissement sort de buses (14, 24) dans la région du dispositif d'affûtage (13) et/ou de la contre-lame (11).

4. Machine agricole selon une des revendications 2 ou 3, **caractérisée par le fait que** la sortie du liquide de refroidissement dans la région du dispositif d'affûtage (13) et/ou de la contre-lame (11) est contrôlée par l'intermédiaire de vannes (27, 28) de manière telle que le liquide sorte simultanément ou alternativement des buses (14, 24) dans la région du dispositif d'affûtage (13) et/ou de la contre-lame (11).

5. Machine agricole selon la revendication 1, **caractérisée par le fait que** le contenant (5, 21) est disposé dans le voisinage immédiat des trains roulants (6, 7).

6. Machine agricole selon une ou plusieurs des revendications précédentes, **caractérisée par le fait que** le contenant (5, 21) entoure au moins partiellement au moins un élément de train roulant 6, 7).

7. Machine agricole selon une ou plusieurs des revendications précédentes, **caractérisée par le fait que** le contenant (5, 21) est utilisé au moins partiellement comme garde-boue (33) pour les éléments de train roulant (6, 7).

8. Machine agricole selon une ou plusieurs des revendications précédentes, **caractérisée par le fait que** le contenant (5, 21) est disposé en-dessous du centre de gravité (S) de la machine agricole (1).

9. Machine agricole selon une ou plusieurs des revendications précédentes, **caractérisée par le fait que** le contenant (5, 21) fait partie du châssis de machine (29).

10. Machine agricole selon une ou plusieurs des revendications précédentes, **caractérisée par le fait que** le liquide est transporté à l'aide d'au moins une pompe (10) et que la pompe est au moins partiellement intégrée au contenant (5, 21).

11. Machine agricole selon la revendication 10, **caractérisée par le fait que** le contenant (5, 21) présente au moins un évidement (18) dans lequel la pompe (10) est au moins partiellement logée.

12. Machine agricole selon une ou plusieurs des revendications précédentes, **caractérisée par le fait que** le contenant (5, 21) fait partie de la carrosserie et qu'au moins une partie (23, 26, 30) du contenant (21) peut basculer et coulisser horizontalement et/ou verticalement.
